# EUROPÄISCHE PATENTSCHRIFT

(11) **EP 1 033 588 B1**
(45) Veröffentlichungstag und Bekanntmachung des Hinweises auf die Patenterteilung: **11.07.2007**
(21) Anmeldenummer: 99123729.8
(22) Anmeldetag: 30.11.1999
(51) Int. Cl.: G01V 1/20

(54) **Schleppantenne**
Towed array
Antenne remorquée

(30) Priorität: 03.03.1999 DE 19909205
(43) Veröffentlichungstag der Anmeldung: 06.09.2000
(73) Patentinhaber: ATLAS ELEKTRONIK GMBH, 28305 Bremen (DE)
(72) Erfinder: Arens, Egidius, 28832 Achim (DE); Busch, Rainer, 26131 Oldenburg (DE)

(56) Entgegenhaltungen:
- WO-A-93/17354
- WO-A-93/17355
- DE-C- 19 518 461
- US-A- 3 518 677

## Beschreibung

Die Erfindung betrifft eine Schleppantenne der im Oberbegriff des Anspruchs 1 genannten Art.

Eine Schleppantenne wird in Peilanlagen in der Wasserschalltechnik zum Detektieren und Orten schallabstrahlender Wasserfahrzeuge verwendet. Sie wird von einem Schleppfahrzeug, z.B. einem Oberflächenschiff oder U-Boot, durch das Wasser gezogen und bei Nichtgebrauch auf eine bordfeste Trommel aufgewickelt. Ihr Akustikteil besteht aus Hydrophonen und elektronischen Bausteinen und weist eine beträchtliche Länge auf.

Aus der DE 195 18 461 C1 ist eine Schleppantenne bekannt, deren Durchmesser ausschließlich von dem Durchmesser der verwendeten Hydrophone bestimmt wird. Die Hydrophone und elektronischen Bausteine befinden sich in einer mit Gel gefüllten schlauchförmigen Hülle, die aus Polyäthylen besteht. Dieser Schlauch nimmt beim Schleppen entstehende Zugkräfte auf, so daß sonst übliche Zugstränge im Schleppantenneninneren entfallen. Die Hydrophone, ggf. mit ihren zugeordneten elektronischen Bausteinen, wie Vorverstärker und AD-Wandler werden durch das nach dem Einfüllen in den Schlauch abbindende Gel fixiert. Durch den geringen Durchmesser können Schleppantennen sehr großer Länge hergestellt werden, die bequem, schnell und platzsparend an Bord untergebracht werden können. Wegen des geringen Volumens und Gewichts ist die Schleppantenne auch für einen Einsatz auf kleineren Schleppschiffen, wie Korvetten und U-Booten, geeignet. Aufgrund ihrer großen Länge wird eine große Ortungsreichweite und hohe Peilgenauigkeit erzielt. Der Schlauch und das Gel stellen keinen Sondermüll dar und können umweltverträglich entsorgt werden.

Beim Schleppen treten längs der Schleppantenne Schwingungen auf, die durch den Zugvorgang oder Wasserbewegungen hervorgerufen werden. Seegang, Strömung oder Turbulenzen verursachen Längs- und Biegewellen oder periodische Einschnürungen des Schlauchs entlang der Schleppantenne, sog. bulge-waves, oder führen zur Torsion. Diese Schwingungen der Schleppantenne stören die Peilung durch Lärm, der an den Hydrohonen verursacht wird, da das Nutz/Störverhältnis von Empfangssignalen der Hydrophone abnimmt, und führen zu Ortsveränderungen der Hydrophone, so daß Öffnungswinkel und Nebenzipfeldämpfung von Richtcharakteristen verändert werden, die durch Laufzeitkompensation der Empfangssignale gebildet werden.

Es ist deshalb Aufgabe der vorliegenden Erfindung, eine Schleppantenne der im Oberbegriff des Anspruchs 1 genannten zu Art zu schaffen, deren Schwingungen beim Zugvorgang gedämpft werden.

Diese Aufgabe wird erfindungsgemäß durch die im Kennzeichenteil des Anspruchs 1 genannten Merkmale gelöst. Zwischen Zugkabel und dem Akustikteil der Schleppantenne wird ein Dämpfungsmodul in die schlauchförmige Hülle integriert, der den gleichen Durchmesser wie das Akustikteil aufweist. Die Hülle ist ein durchgehender Schlauch mit Gelfüllung, in dem sich längs- und biegeweiche Sektionen und längs- und biegefeste Sektionen des Dämpfungsmoduls paarweise abwechseln. Die weichen Sektionen wirken als Feder, deren Eigenschaft durch die Elastizitätsmoduli von Hülle und Gel und ihre Länge bestimmt wird. Die Masse der weichen Sektionen ist klein gegenüber der Masse der sich anschließenden festen Sektion, deren Biegesteifigkeit durch im Gel gelagerte Längsstäbe sehr hoch ist. Jedes Paar aus zwei Sektionen bildet ein FederMasse-System für tiefe Frequenzen.

Der Dämpfungsmodul aus einem oder mehreren Paaren kann in einem analogen elektrischen Ersatzschaltbild als gedämpfter Tief- und Bandpaß dargestellt werden. Die Federung von Schlauch und Gel jeder Sektion bildet Kondensator und Leitwert, während ihre Masse zusammen mit der Masse der Längsstäbe Induktivität und Ohmscher Widerstand darstellen. Der Übergang zwischen Zugkabel und Dämpfungsmodul der Schleppantenne wirkt als Impedanzsprung. Die Ausbreitung von tieffrequenten Längs- und Biegewellen und Bulge-Waves wird gemindert und durch den anschließenden Bandpaß bis zu einer Sperrfrequenz gedämpft. Diese Sperrfrequenz ist gleich der Grenzfrequenz des Tiefpasses, der Schwingungen oberhalb der Grenzfrequenz abdämpft. Bei hohen Frequenzen wirkt der Dämpfungsmodul zusätzlich wie ein bedämpfter Wellenleiter mit Reflexionsstellen an den Übergängen von den weichen zu den biegesteifen Sektionen.

Bei einer Forderung, daß auch langsame Schwingungen bis zu einigen Hertz gedämpft werden sollen, wird ausgehend von dieser Sperrfrequenz Dicke und Material der Hülle, die Zusammensetzung des Gels, die Länge der Sektionen und das Material der Längsstäbe dimensioniert.

Die Vorteile der erfindungsgemäßen Schleppantenne nach Anspruch 1 bestehen darin, daß Dämpfungsmodul und Akustikteil sich in der gleichen schlauchförmigen Hülle befinden und Querschnittsveränderungen oder Stoßstellen als Quelle für Schwingungen und Vibrationen wegfallen. Weiterhin ist von Vorteil, daß keine Flüssigkeitssäule innerhalb gegeneinander abgeschlossener Sektionen sich bewegen kann, da die Sektionen keine mit Flüssigkeit gefüllte Kammern sind, sondern sämtlich durchgehend mit Gel prall gefüllt sind. Auch das Akustikteil schließt sich an den Dämpfungsmodul nahtlos an, dessen Hydrophone und elektrische Bausteine ebenfalls in Gel gelagert sind. Auch bei einer Dämpfung sehr niederfrequenter Schwingungen beträgt die Länge des Dämpfungsmoduls nur einen Bruchteil der Länge des Akustikteils und ist aufgrund des geringen Querschnitts der gesamten Schleppantenne einfach ein- und ausbringbar und platzsparend an Bord zu lagern.

Der Vorteil einer Anordnung der Längsstäbe in der biegesteifen Sektion gemäß der erfindungsgemäßen Weiterbildung der Schleppantenne nach Anspruch 2 besteht darin, daß die wirksame Masse gleichmäßig verteilt ist und trotzdem zwischen Längsstäben und Hülle eine Gellagerung gewährleistet ist, wobei die neutrale Faser in der Mitte der Schleppantenne liegt.

Die Materialangaben für die biegesteifen Längsstäbe gemäß den vorteilhaften Weiterbildungen nach den Ansprüchen 3 und 4 lassen einen weiten Spielraum bei der Dimensionierung, so daß alle Randbedingungen bzgl. Masse, Dichte, Elastizitätsmodul und geometrischer Form erfüllt werden könnnen, um die gewünschte Dämpfung und eine einfache Fertigung und Handhabung der Schleppantenne zu erzielen.

Gemäß den vorteilhaften Weiterbildungen der erfindungsgemäßen Schleppantenne nach Anspruch 5 und 6 ist ein Polyurethanschlauch als Hülle mit einem Zweikomponenten-Kautschuk als Gel besonders vorteilhaft, da die materialabhängige Ausbreitungsgeschwindigkeit für Biegewellen und Bulge-Waves vorgegebener Sperrfrequenz zu einer Dämpfung und einer Länge des Dämpfungsmoduls führt, die exakte Peilungen auch im Niedrigstfrequenzbereich gestattet und trotzdem bequem und leicht handhabbar ist. Querschnitt und Gesamtlänge der Schleppantenne werden im wesentlichen vom Akustikteil bestimmt. Die Masse der Sektionen und damit die Induktivitäten des analogen Bandpasses werden durch den Querschnitt der Längsstäbe entsprechend der gewünschten Sperrfrequenz festgelegt. Zwischen Zugkabel und Akustikteil werden mehrere abwechselnd weiche und steife Sektionen vorgesehen, deren Gesamtlänge ca. 20 bis 40 m bei einer Länge des Akustikteils von 100 oder 200 m beträgt, während am Ende ein Dämpfungsmodul von einigen Metern, z.B. 5 m reicht, um eine Ausbreitung von Längs- und Biegewellen und Bulge-Waves mit Wellenlängen von ca. 3 - 6 m bei 10 Hz entlang der Schleppantenne um ca. 50 dB zu dämpfen.

Der Vorteil der erfindungsgemäße Weiterbildung der Schleppantenne nach Anspruch 7 besteht darin, daß durch in der Hülle angeordnete Auftriebskörper und Abtriebskörper die Schleppantenne ausgerichtet und Torsionswellen gedämpft werden. Besonders wirkungsvoll ist eine Sektion aus in Längsrichtung gegenüberliegenden Auf- und Abtriebskörpern aus Schaummaterial und aus Bleikugeln, wie es in den Ansprüchen 8 und 9 angegeben ist. Bei Verwendung von Metallschaum, synthaktischem Schaum, Glasschaum oder Kunststoffschaum und kleinen Bleikügelchen ist der Dämpfungsmodul akustisch transparent. Durch die Größe der Auftriebskörper ist die Dichte des Dämpfungsmoduls so einzustellen, daß sie ungefähr gleich Wasser ist, obwohl die Polyurethanhülle eine Dichte, die größer als 1 ist, aufweist.

Ein Ausgleich auch des Gewichts der Längsstäbe wird mit den vorteilhaften Weiterbildungen nach den Ansprüchen 10 und 11 erreicht, da der mittig angeordnete Auftriebskörper eine wesentlich geringere Dichte als die Längsstäbe aufweist. Die Abtriebskörper sind zwischen zwei Längsstäben angeordnet, wobei die Längsstäbe im Kreis um den Autriebskörper im Gel gelagert sind. Hieran schließt eine mit Gel gefüllte Sektion gleicher Länge an, die als Feder wirkt, und abwechselnd wieder eine Sektion mit Längsstäben und Auf- und Abtriebskörpern usw., wodurch eine ruhige Lage der Schleppantenne auch bei einer Zuggeschwindigkeit von 20 kn erreicht wird.

Am Ende der Schleppantenne befindet sich ein Dämpfungsmodul aus mehreren Sektionen, dessen letzte Sektion Längsstäbe aufweist. Den Abschluß der Schleppantenne bildet ein Büschel aus Fäden, insbesondere Nylondrähten, wie es in den vorteilhaften Weiterbildungen nach den Ansprüchen 12 - 14 angegeben ist. Das Büschel wird in einem Kunststoffpfropfen zusammengefaßt, mit dem die Hülle so verschlossen wird, daß sie über den Kunststoffpfropfen ragt und eine scharfe Abrißkante bildet. Die an der Abrißkante abreißende Wasserströmung wird durch die Fäden unperiodisch verteilt. Eine Schwingungsanregung des Endstücks der Schleppantenne setzt sich nach vorn nicht fort, da die Sektion mit den Längsstäben eine große Steifigkeit für Längs- und Biegewellen hat, an die eine weiche Feder angreift, nämlich die daran anschließende gelgefüllte Sektion. Während die Schwingungsquelle durch die Fäden eine kleine Masse und eine große Feder aufweist. Durch diese Fehlanpassung unterbleibt eine Übertragung der Strömungsbewegungen auf die Schleppantenne und die Schleppantenne wird vom Ende her nicht zum Schwingen angeregt.

Das Material für die Hülle der Schleppantenne kann für die biegesteifen und weichen Sektionen aus Kunststoffen unterschiedlicher Elastizitätsmoduli hergestellt werden. Besonders elegant ist eine durchgehende Hülle gemäß Anspruch 15, vorzugsweise in Form eines Schlauchs aus Polyurethan, der die gewünschten federnden Eigenschaften in den Sektionen des Dämpfungsmoduls gewährleistet. Dieser Schlauch ist akustisch transparent, so daß er auch für den Akustikteil mit Vorteil einsetzbar ist. Versuche mit einem Schlauch mit einem Durchmesser von weniger als 30 mm entsprechend den für diesen Frequenzbereich üblichen Hydrophonen und einer Wanddicke von 2 mm haben optimale Ergebnisse gezeigt.

In dem Schlauch werden die Dämpfungsmoduli, Hydrophone und elektronischen Bausteine und elektrische Daten- und Versorgungsleitungen in Gel gelagert. Es hat sich als fertigungstechnisch besonders einfach erwiesen, einen Gelstrang herzustellen, in dem sich Gelabschnitte und Abschnitte mit in Gel gelagerten Längsstäben und Auf- und Abtriebskörpern abwechseln. Lückenlos schließt sich daran das Akustikteil mit den Hydrophonen und Elektronikbausteinen an, die ebenfalls vom Gel umschlossen sind. Das Ende bildet ein Dämpfungsmodul. Dieser überaus klebrige Gelstrang wird zum Einführen in den Schauch mit einem Seidengeflecht umgeben, mit Öl benetzt und mit konstanter Geschwindigkeit in den Schlauch hineingezogen. Durch die Benetzung mit Öl ist gewährleistet, daß der Gelstrang gleitend in den Schlauch gelangt, Gel und Öl ohne Lufteinschlüsse miteinander derart reagieren, daß das Gel aufquillt und prall in der schlauchförmigen Hülle unter Druck sitzt, wie es in der Patentanmeldung DE 198 11 335.8 angegeben ist.

Die Erfindung ist anhand eines Ausführungsbeispiels für eine Schleppantenne mit gelgefüllter Hülle näher beschrieben.

Es zeigen
- Fig. 1: einen Aufbau der gesamten Schleppantenne
- Fig. 2: einen Dämpfungsmodul und
- Fig. 3: einen modifizierten Dämpfungsmodul.

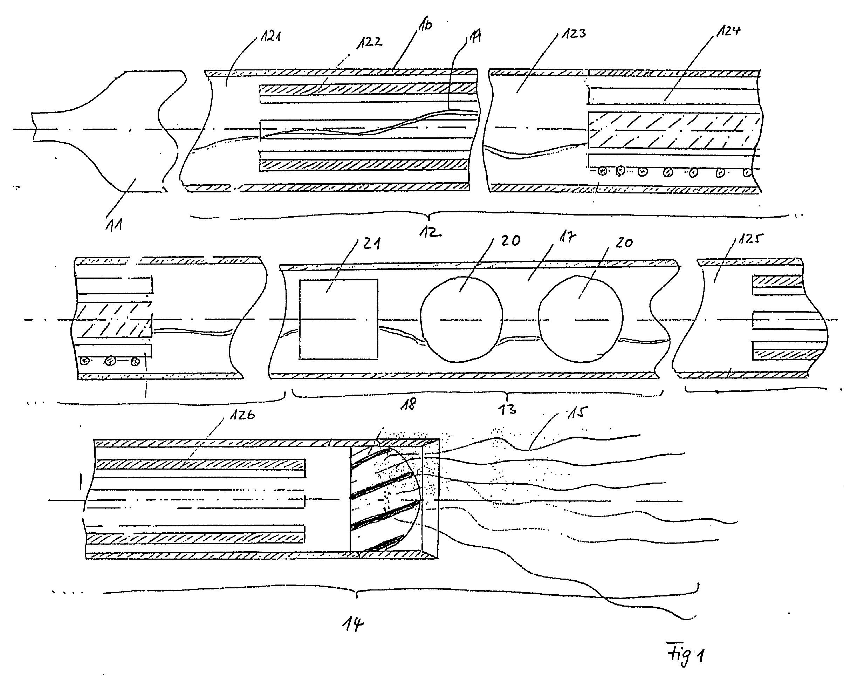

Die Schnittdarstellung in Fig. 1 zeigt eine Schleppantenne mit einem ca. 200 m langen Zugkabel 11, das mit einem schleppenden Wasserfahrzeug verbunden ist, mit einem 20 - 40 m langen Dämpfungsmodul 12 oder VIM (Vibration Isolation Modul), einem ca. 200 m langen Akustikteil und am Ende mit einem ca. 5 m langen Dämpfungsmodul 14 und einem ca. 20 cm langen Büschel 15 aus Nylonfäden. Ein Schlauch aus Polyurethan bildet die äußere Hülle 16 der Schleppantenne. Der Schlauch ist mit Gel 17 gefüllt, mit einem Kunststoffpfropfen 18 geschlossen und ragt über den Kunststoffpfropfen 18 hinaus, in dem das Büschel 15 befestigt ist. Daten- und Versorgungsleitungen 19 verbinden Hydrophone 20 und elektronische Bausteine 21 mit Schaltungen auf dem schleppenden Wasserfahrzeug.

Die Dämpfungsmodule 12 und 14 bestehen aus mehreren, sich abwechselnden biegeweichen und biegesteifen Sektionen 121, 122, 123, 124, 125, 126. Die federnde Wirkung der Sektionen 121, 123, 125 wird durch das Material der Hülle 16, das Gel 17 und ihre geometrischen Ausmaße bestimmt. Die Sektionen 122, 124, 126 sind biegesteif. Ihre Steifheit wird durch Material und geometrische Ausmaße der darin befindlichen Längsstäbe im wesentlichen bestimmt.

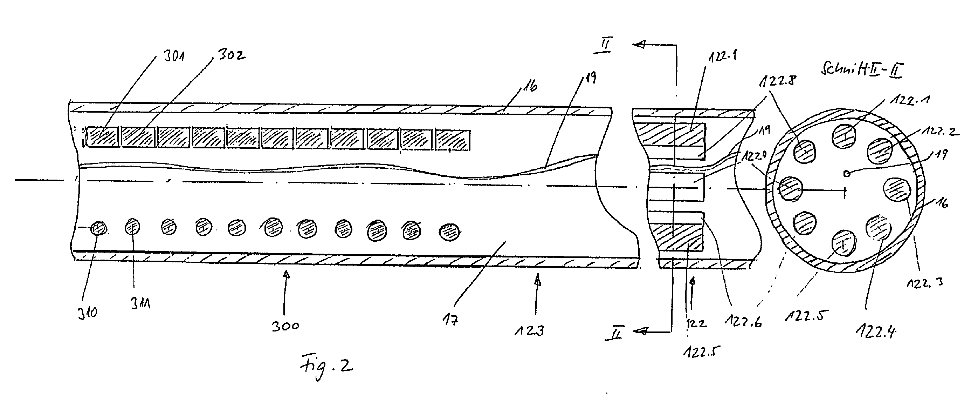

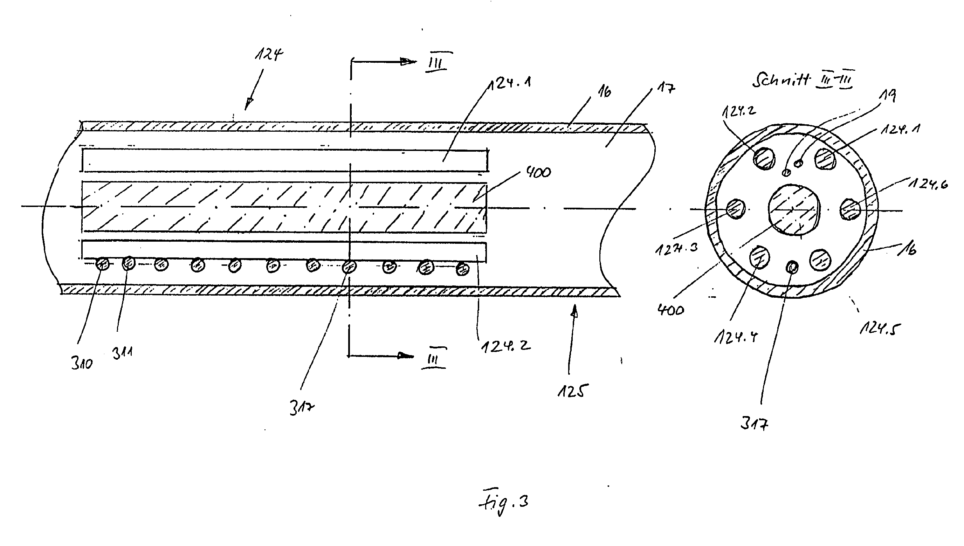

Fig. 2 zeigt im Querschnitt und im Längsschnitt II-II die biegesteife Sektion 122 mit acht Längsstäben, 122.1, 122.2, ... 122.8 aus Metall, die im Kreis an der inneren Peripherie des Schlauchs in Gel 17 gebettet sind. Zur Verhinderung von Torsionswellen dient eine Sektion 300 aus Auftriebskörpern 301, 302, ...., die aus synthaktischem Schaum hergestellt sind, und Abtriebskörpern 310, 311 ... aus Blei, die von Gel 17 umschlossen sind. Entweder sind rotationsdämpfende Sektionen 300 abwechselnd mit biegeweichen und -steifen Sektionen 121, 122, 123.... in den Dämpfungsmodul der Schleppantenne 10 integriert oder es werden eine rotationsdämpfende und eine biegesteife Sektion zusammengefaßt, wie es für die Sektion 124 in Fig. 1 und in Fig. 3 im Querschnitt und Längsschnitt III-III gezeigt ist. Sechs Längsstäbe 124.1, .... 124.6 sind kreisförmig angeordnet. Zwischen zwei Längsstäben 124.4 und 124.5 befinden sich Abtriebskörper 310, 311,.... und in der Mitte anstelle der Auftriebskörper 301, 302, .... ein einziger Auftriebskörper 400 von der Länge der Längsstäbe 124.1, ... 124.6. Größe und Material des Auftriebskörpers 400 werden abhängig von dem gewünschten Auftrieb der Schleppantenne 10 gewählt.

## Patentansprüche

1. Schleppantenne mit einem Zugkabel (11), mit einem Hydrofon (20) und Elektronikbausteine (21) aufweisenden Akustikteil (13), mit einer elastischen, schlauchförmigen Hülle (16), die das Akustikteil (13) aufnimmt und durchgehend mit Gel (17) gefüllt ist, und mit einem zwischen Zugkabel (11) und Akustikteil (13) angeordneten Dämpfungsmodul (12), **dadurch gekennzeichnet, dass** das Dämpfungsmodul (12) aus mindestens einem Paar in die Hülle (16) integrierter, gelgefüllter Sektionen (121, 122 bzw. 123, 124) besteht, wobei eine Sektion biegeweich, die andere biegefest ausgestaltet ist une die Sektionen in Längsrichtung der Hülle (16) hintereinander angeordnet sind, und dass in der biegesteifen Sektion (122, bzw. 124) mehrere biegesteife Längsstäbe (122.1, 122.2 ... 122.8 bzw. 124.1, 124.2 ... 124.6), die voneinander beabstandet sich in Längsrichtung der Hülle (16) erstrecken, im Gel (17) eingebettet sind.

2. Schleppantenne nach Anspruch 1, **dadurch gekennzeichnet, dass** die Längsstäbe (122.1, ... 122.8 bzw. 124.1, ... 124.6) im Kreis nahe der inneren Peripherie der Hülle (16) angeordnet sind.

3. Schleppantenne nach Anspruch 1 oder 2, **dadurch gekennzeichnet, dass** die Längsstäbe (122.1, ... 122.8 bzw. 124.1, ... 124.6) Drähte oder Seile sind und aus Messing oder Stahl oder Glasfasern oder Kunststoff oder glasfaserverstärktem Kohlenstoff bestehen.

4. Schleppantenne nach Anspruch 3, **dadurch gekennzeichnet, dass** die Drähte oder Seile gereckt sind.

5. Schleppantenne nach einem der Ansprüche 1 bis 4, **dadurch gekennzeichnet, dass** die Hülle (16) aus einem Stück besteht und einen Elastizitätsmodul von ungefähr 10 x 10⁶ N/m² aufweist und dass das Gel (17) einen Elastizitätsmodul von ungefähr 10³ N/m² aufweist.

6. Schleppantenne nach einem der Ansprüche 1 bis 5, **dadurch gekennzeichnet, dass** die Länge der Längsstäbe (122.1, ... 122.8 bzw. 124.1, ... 124.6) abhängig von der zu dämpfenden Wellenlänge von Längs- und Biegewellen und/oder bulge-waves und der erforderlichen Dämpfung gewählt ist.

7. Schleppantenne nach einem der Ansprüche 1 bis 6, **dadurch gekennzeichnet, dass** das Dämpfungsmodul (12) mindestens eine in die gelgefüllte Hülle (16) integrierte rotationsdämpfende Sektion (300) mit mehreren an der inneren Peripherie der Hülle (16) nebeneinander in Längsrichtung hintereinander angeordneten, im Gel (17) eingebetteten Abtriebskörpern (310, 311 ...) und/oder mit an der gegenüberliegenden Peripherie oder in der Mitte der Hülle (16) angeordneten, im Gel (17) eingebetteten Auftriebskörpern (301, 302 ... bzw. 400) aufweist, und dass die Dichte der Auftriebskörper (30, 302 ...) geringer als die Dichte der Abtriebskörper (310, 311 ...) ist.

8. Schleppantenne nach Anspruch 7, **dadurch gekennzeichnet, dass** die Abtriebskörper (310, 311 ...) Bleikugeln sind.

9. Schleppantenne nach Anspruch 7 oder 8, **dadurch gekennzeichnet, dass** die Auftriebskörper (301, 302, ... bzw. 400) aus syntaktischem Schaum oder Metallschaum oder Glasschaum oder Kunststoffschaum bestehen.

10. Schleppantenne nach einem der Ansprüche 7 bis 9, **dadurch gekennzeichnet, dass** die Abtriebskörper (310, 311 ...) zwischen zwei benachbarten Längsstäben (124.4, 124.5) hintereinander in Längsrichtung angeordnet sind und die Auftriebskörper (400) mittig in der Hülle (16) angeordnet sind.

11. Schleppantenne nach Anspruch 10, **dadurch gekennzeichnet, dass** die mittig angeordneten Auftriebskörper (400) aus einem Stück gebildet sind.

12. Schleppantenne nach einem der Ansprüche 1 bis 11, **dadurch gekennzeichnet, dass** in Schlepprichtung hinter dem Akustikteil (13) ein zweites Dämpfungsmodul (14) aus mindestens einem Paar von in die Hülle (16) integrierten, gelgefüllten Sektionen (125, 126) angeordnet ist, die in Längsrichtung der Hülle (16) hintereinander angeordnet sind, und dass in der einen Sektion (126) mehrere biegesteife Längsstäbe, die voneinander beabstandet sich in Längsrichtung der Hülle (16) erstrecken, im Gel (17) eingebettet sind.

13. Schleppantenne nach Anspruch 12, **dadurch gekennzeichnet, dass** die letzte Sektion (126) des zweiten Dämpfungsmoduls (14) mit einem Kunststoffpfropfen (18) abgeschlossen ist, an dem ein Büschel (15) mit kurzen Fäden vorgebbarer Anzahl angebracht ist, und dass die Hülle (16) über den Kunststoffpfropfen (18) ragt und am Ende eine scharfe Abrisskante aufweist.

14. Schleppantenne nach Anspruch 13, **gekennzeichnet durch** Fäden aus Nylondrähten.

15. Schleppantenne nach einem der Ansprüche 1 bis 14, **dadurch gekennzeichnet, dass** die durchgehende Hülle (16) für die Dämpfungsmodule (12, 14) und den Akustikteil (13) aus dem gleichen Material hergestellt ist.

16. Schleppantenne nach Anspruch 15, **dadurch gekennzeichnet, dass** die Hülle (16) als Schlauch mit einem auf den Außendurchmesser der Hydrofone (20) abgestimmten Durchmesser und einer Wanddicke von wenigen Millimetern ausgebildet ist.

17. Schleppantenne nach einem der Ansprüche 1 bis 16, **dadurch gekennzeichnet, dass** das Gel (17) einen Gelstrang bildet, in dem die Längsstäbe (122, 124, 126) die Auftriebskörper (301, 302, ... 400), die Abtriebskörper (310, 311, ...), die Hydrofone (20), die Elektronikbausteine (21) und die elektrischen Daten- und Versorgungsleitungen (19) eingegossen sind, und dass der Gelstrang mit einem Seidengeflecht umgeben und mit Öl benetzt und in die Hülle (16) eingezogen ist.

## Claims

1. Towed antenna having a towing cable (11), having an acoustics part (13) which has a hydrophone (20) and electronics modules (21), having an elastic sleeve (16) in the form of a flexible tube, which holds the acoustics part (13) and is completely filled with gel (17), and having a damping module (12) which is arranged between the towing cable (11) and the acoustics part (13), **characterized in that** the damping module (12) comprises at least one pair of gel-filled sections (121, 122 and 123, 124) integrated in the sleeve (16), with one section being designed to bend easily and the other to resist bending, and with the sections being arranged one behind the other in the longitudinal direction of the sleeve (16), and **in that** a plurality of longitudinal rods (122.1, 122.2 ... 122.8 and 124.1, 124.2 ... 124.6) which resist bending and extend, at a distance from one another, in the longitudinal direction of the sleeve (16) are embedded in the gel (17) in the section (122 or 124) which resists bending.

2. Towed antenna according to Claim 1, **characterized in that** the longitudinal rods (122.1, ... 122.8 and 124.1, ... 124.6) are arranged in the circle close to the inner periphery of the sleeve (16).

3. Towed antenna according to Claim 1 or 2, **characterized in that** the longitudinal rods (122.1, ... 122.8 and 124.1, ... 124.6) are wires or cables and are made of brass, steel, glass fibres, plastic or glass-fibre-reinforced carbon.

4. Towed antenna according to Claim 3, **characterized in that** the wires or cables are stretched.

5. Towed antenna according to one of Claims 1 to 4, **characterized in that** the sleeve (16) is integral and has a modulus of elasticity of approximately 10 x 10⁶ N/m², and **in that** the gel (17) has a modulus of elasticity of approximately 10³ N/m².

6. Towed antenna according to one of Claims 1 to 5, **characterized in that** the length of the longitudinal rods (122.1, ... 122.8 and 124.1, 124.6) is chosen as a function of the wavelength to be damped of longitudinal waves and bending waves, and/or bulge waves, and of the required damping.

7. Towed antenna according to one of Claims 1 to 6, **characterized in that** the damping module (12) has at least one rotationally damping section (300) which is integrated in the gel-filled sleeve (16), with a plurality of sinking bodies (310, 311 ...), which are embedded in the gel (17) and are arranged one behind the other in the longitudinal direction, alongside one another on the inner periphery of the sleeve (16), and/or with buoyant bodies (301, 302 ... and 400) which are embedded in the gel (17) and are arranged on the opposite periphery or in the centre of the sleeve (16), and **in that** the density of the buoyant bodies (301, 302 ...) is less than the density of the sinking bodies (310, 311 ...).

8. Towed antenna according to Claim 7, **characterized in that** the sinking bodies (310, 311 ...) are lead spheres.

9. Towed antenna according to Claim 7 or 8, **characterized in that** the buoyant bodies (301, 302, ... and 400) are made of syntactic foam, metal foam, glass foam or plastic foam.

10. Towed antenna according to one of Claims 7 to 9, **characterized in that** the sinking bodies (310, 311 ...) are arranged one behind the other in the longitudinal direction between two adjacent longitudinal rods (124.4, 124.5) and the buoyant bodies (400) are arranged centrally in the sleeve (16).

11. Towed antenna according to Claim 10, **characterized in that** the centrally arranged buoyant bodies (400) are formed integrally.

12. Towed antenna according to one of Claims 1 to 11, **characterized in that** a second damping module (14) comprising at least one pair of gel-filled sections (125, 126), which are integrated in the sleeve (16), is arranged behind the acoustics part (13) in the towing direction, with the gel-filled sections (125, 126) being arranged one behind the other in the longitudinal direction of the sleeve (16), and **in that** a plurality of longitudinal rods which resist bending and extend at a distance from one another in the longitudinal direction of the sleeve (16) are embedded in the gel (17) in the one section (126).

13. Towed antenna according to Claim 12, **characterized in that** the last section (126) of the second damping module (14) is closed with a plastic plug (18) to which a cluster (15) comprising a predeterminable number of short threads is fitted, and **in that** the sleeve (16) projects beyond the plastic plug (18) and has a sharp cut-off edge at the end.

14. Towed antenna according to Claim 13, **characterized by** threads composed of nylon wires.

15. Towed antenna according to one of Claims 1 to 14, **characterized in that** the continuous sleeve (16) for the damping modules (12, 14) and for the acoustics part (13) is produced from the same material.

16. Towed antenna according to Claim 15, **characterized in that** the sleeve (16) is in the form of a flexible tube with a diameter which is matched to the external diameter of the hydrophones (20), and with a wall thickness of a few millimetres.

17. Towed antenna according to one of Claims 1 to 16, **characterized in that** the gel (17) forms a gel strand in which the longitudinal rods (122, 124, 126), the buoyant bodies (301, 302, ... 400), the sinking bodies (310, 311, ...), the hydrophones (20), the electronics modules (21) and the electrical data and supply lines (19) are encapsulated, and **in that** the gel strand is surrounded by a silk mesh, is wetted with oil, and is drawn into the sleeve (16).

## Revendications

1. Antenne remorquée comprenant un câble de traction (11), un hydrophone (20) et une partie acoustique (13) présentant des composants d'électronique (21), une enveloppe (16) élastique et en forme de flexible, qui reçoit la partie acoustique (13) et est remplie de façon continue de gel (17), et un module d'amortissement (12) disposé entre le câble de traction (11) et la partie acoustique (13), **caractérisée en ce que** le module d'amortissement (12) comprend au moins une paire de sections (121, 122 ou 123, 124) intégrées dans l'enveloppe (16) et remplies de gel, une section étant conçue souple en flexion et l'autre rigide en flexion et les sections étant disposées l'une derrière l'autre dans la direction longitudinale de l'enveloppe (16), et **en ce que** dans la section (122 ou 124) rigide en flexion, plusieurs barres longitudinales (122.1, 122.2... 122.8 ou 124.1, 124.2... 124.6) rigides en flexion, qui s'étendent dans le sens longitudinal de l'enveloppe (16) espacées les unes des autres, sont intégrées dans le gel (17).

2. Antenne remorquée selon la revendication 1, **caractérisée en ce que** les barres longitudinales (122.1, ... 122.8 ou 124.1, ... 124.6) sont disposées en cercle à proximité de la périphérie intérieure de l'enveloppe (16).

3. Antenne remorquée selon la revendication 1 ou 2, **caractérisée en ce que** les barres longitudinales (122.1, ... 122.8 ou 124.1, ... 124.6) sont des fils ou des câbles et sont à base de laiton ou d'acier ou de fibres de verre ou de plastique ou de carbone renforcé de fibre de verre.

4. Antenne remorquée selon la revendication 3, **caractérisée en ce que** les fils ou les câbles sont étirés.

5. Antenne remorquée selon l'une quelconque des revendications 1 à 4, **caractérisée en ce que** l'enveloppe (16) est constituée d'une pièce et présente un module d'élasticité d'environ 10 x 10⁶ N/m² et **en ce que** le gel (17) présente un module d'élasticité d'environ 10³ N/m².

6. Antenne remorquée selon l'une quelconque des revendications 1 à 5, **caractérisée en ce que** la longueur des barres longitudinales (122.1, ... 122.8 ou 124.1, ... 124.6) est choisie en fonction de la longueur d'onde à amortir d'ondes longitudinales et d'ondes de flexion et/ou de bulge-waves et de l'amortissement nécessaire.

7. Antenne remorquée selon l'une quelconque des revendications 1 à 6, **caractérisée en ce que** le module d'amortissement (12) présente au moins une section (300) amortissant en rotation et intégrée dans l'enveloppe (16) remplie de gel avec plusieurs corps de force descensionnelle (310, 311...) disposés sur la périphérie intérieure de l'enveloppe (16) les uns à côté des autres et les uns derrière les autres dans le sens longitudinal et intégrés dans le gel (17) et/ou avec des corps de force ascensionnelle (301, 302... ou 400) disposés sur la périphérie opposée ou au centre de l'enveloppe (16) et intégrés dans le gel (17), et **en ce que** la densité des corps de force ascensionnelle (301, 302...) est plus faible que la densité de corps de force descensionnelle (310, 311...).

8. Antenne remorquée selon la revendication 7, **caractérisée en ce que** les corps de force descensionnelle (310, 311...) sont des billes en plomb.

9. Antenne remorquée selon la revendication 7 ou 8, **caractérisée en ce que** les corps de force ascensionnelle (301, 302, ... ou 400) sont à base de mousse synthétique ou de mousse métallique ou de mousse de verre ou de mousse de plastique.

10. Antenne remorquée selon l'une quelconque des revendications 7 ou 9, **caractérisée en ce que** les corps de force descensionnelle (310, 311...) sont disposés entre deux barres longitudinales (124.4, 124.5) voisines, les uns derrière les autres dans le sens longitudinal et les corps de force ascensionnelle (400) sont disposés au centre dans l'enveloppe (16).

11. Antenne remorquée selon la revendication 10, **caractérisée en ce que** les corps de force ascensionnelle (400) disposés au centre sont formés d'une seule pièce.

12. Antenne remorquée selon l'une quelconque des revendications 1 à 11, **caractérisée en ce que** dans le sens de remorquage derrière la partie acoustique (13) est disposé un second module d'amortissement (14) constitué d'au moins une paire de sections (125, 126) intégrées dans l'enveloppe (16) et remplies de gel, qui sont disposées l'une derrière l'autre dans le sens longitudinal de l'enveloppe (16), et **en ce que** plusieurs barres longitudinales rigides en flexion, qui sont espacées les unes des autres et s'étendent dans la direction longitudinale de l'enveloppe (16), sont intégrées dans le gel (17) dans une section (126).

13. Antenne remorquée selon la revendication 12, **caractérisée en ce que** la dernière section (126) du second module d'amortissement (14) est fermée par un bouchon plastique (18) sur lequel est placée une touffe (15) avec des fils courts de nombre prédéfinissable, et **en ce que** l'enveloppe (16) dépasse du bouchon plastique (18) et présente sur l'extrémité une arête de déchirement tranchante.

14. Antenne remorquée selon la revendication 13, **caractérisée par** des fils à base de fils de nylon.

15. Antenne remorquée selon l'une quelconque des revendications 1 à 14, **caractérisée en ce que** l'enveloppe (16) continue pour les modules d'amortissement (12, 14) et la partie acoustique (13) sont fabriquées dans le même matériau.

16. Antenne remorquée selon la revendication 15, **caractérisée en ce que** l'enveloppe (16) est conçue sous forme de flexible avec un diamètre adapté au diamètre extérieur des hydrophones (20) et une épaisseur de paroi de quelques millimètres.

17. Antenne remorquée selon l'une quelconque des revendications 1 à 16, **caractérisée en ce que** le gel (17) forme une branche de gel dans laquelle les barres longitudinales (122, 124, 126), les corps de force ascensionnelle (301, 302, ... 400), les corps de force descensionnelle (310, 311, ...), les hydrophones (20), les composants d'électronique (21) ainsi que les lignes de données et d'alimentation électriques (19) sont moulés, et **en ce que** la branche de gel est entourée par un treillis de soie et humectée avec de l'huile et est introduite dans l'enveloppe (16).
